# EUROPEAN PATENT APPLICATION

(11) **EP 4 228 207 A1**
(43) Date of publication of application: **16.08.2023**
(21) Application number: 22203806.9
(22) Date of filing: 26.10.2022
(51) Int. Cl.: H04L 9/40, G06Q 20/02

(54) **RECOGNITION-RELATED DATA PROCESSING PROGRAM, METHOD OF PROCESSING RECOGNITION-RELATED DATA, AND INFORMATION PROCESSING SYSTEM**

(30) Priority: 15.02.2022 JP 2022021037
(71) Applicant: FUJITSU LIMITED, Kawasaki-shi, Kanagawa 211-8588 (JP)
(72) Inventor: Inoue, Koki, Kawasaki-shi, Kanagawa, 211-8588 (JP)
(74) Representative: Hoffmann Eitle

(57) **Abstract**

A recognition-related data processing program including instructions, when executed by a computer of a user terminal to be used by a user, cause the computer to execute processing including: accepting an audit demand for an audit of recognition-related data received from a terminal; transmitting, in response to the audit demand, an audit request to a first terminal that is different from the user terminal, and obtaining audit information on the recognition-related data transmitted from the first terminal; and transmitting the audit information to a second terminal that is able to verify correctness of the audit information and that executes a return, to the user, a consideration corresponding to the recognition-related data, and demanding that the second terminal return, to the user, the consideration which corresponds to the recognition-related data associated with the transmitted audit information.

## Description

### FIELD

The embodiments discussed herein are related to a recognition-related data processing program, a method of processing the recognition-related data, and an information processing system.

### BACKGROUND

Today, in many companies, greater importance is placed on creation of a work environment and culture in order to improve the motivation and engagement of employees and improve the performance of teams. As one of the measures, creation of a culture in which employees mutually transmit authorization and recognition is considered promising, and such services and tools are provided.

Examples of the related art include Japanese Laid-open Patent Publication Nos. 2021-114131 and 2006-40253, and Web content in <URL:https://monstar-lab.com/cases/peer-trust> searched on December 20, 2021.

### SUMMARY

### TECHNICAL PROBLEMS

For example, in the case of the web content in https://monstarlab.com/cases/peer-trust searched on December 20, 2021, recognition cards are mutually transmitted between employees. However, since it is difficult for the employees to realize a quantitative advantage by only exchanging the cards, there is a possibility that the culture of mutually transmitting the cards is not established. Meanwhile, as described in Japanese Laid-open Patent Publication No. 2021-114131, when points presented from an other person are able to be exchanged for personnel evaluation, money, goods, or the like, it is thought that the motivation or the like of the employees is improved. However, in this case, it is also thought that the employees collude with each other to mutually transmit the points or the cards for recognition in an unauthorized manner.

In one aspect, an object of the present disclosure is to suppress unauthorized exchange of recognition-related data between user terminals in a case where a consideration corresponding to the recognition-related data is returned to a user.

### SOLUTION TO PROBLEM

According to an aspect of the embodiments, there is provided a recognition-related data processing program including instructions which, when executed by a computer of a user terminal to be used by a user, cause the computer to execute processing including: accepting an audit demand for an audit of at least one piece of recognition-related data received from an other user terminal; transmitting, in response to the audit demand, an audit request to a first terminal that is different from the user terminal, and obtaining audit information on the at least one piece of recognition-related data transmitted from the first terminal; and transmitting at least the audit information to a second terminal that is able to verify correctness of the audit information and that executes a return, to the user, a consideration which corresponds to the at least one piece of recognition-related data, and demanding that the second terminal return, to the user, the consideration which corresponds to the at least one piece of recognition-related data associated with the transmitted audit information.

### ADVANTAGEOUS EFFECTS OF INVENTION

The unauthorized exchange of the recognition-related data between the user terminals may be suppressed in the case where the consideration corresponding to the recognition-related data is returned to the user.

### BRIEF DESCRIPTION OF DRAWINGS

FIG. 1 is a diagram schematically illustrating a configuration of an information processing system according to a first embodiment;
FIG. 2A is a diagram illustrating an example of a hardware configuration of a user operation terminal, an auditor operation terminal, and a servicer operation terminal, and FIG. 2B is a diagram illustrating an example of a hardware configuration of a recognition system and a certification management system;
FIG. 3 is a functional block diagram of devices included in the information processing system according to the first embodiment;
FIG. 4 is a diagram illustrating an example of a data structure of a recognition database (DB);
FIG. 5 is a diagram for explaining a distributed file sharing system;
FIG. 6 is a timing chart illustrating processing of the devices included in the information processing system according to the first embodiment;
FIGs. 7A to 7C are diagrams (No. 1) illustrating examples of screen displays according to the first embodiment;
FIG. 8 is a diagram (No. 2) illustrating an example of a screen display according to the first embodiment;
FIG. 9 is a diagram illustrating an overview of processing in the information processing system according to the first embodiment;
FIG. 10 is a diagram schematically illustrating a configuration of an information processing system according to a second embodiment;
FIG. 11 is a diagram illustrating an overview of processing in the information processing system according to the second embodiment;
FIG. 12 is a functional block diagram of devices included in the information processing system according to the second embodiment;
FIG. 13 is a timing chart illustrating processing of the devices included in the information processing system according to the second embodiment;
FIGs. 14A and 14B are diagrams (No. 1) illustrating examples of screen displays according to the second embodiment;
FIGs. 15A and 15B are diagrams (No. 2) illustrating examples of screen displays according to the second embodiment;
FIGs. 16A and 16B are diagrams (No. 3) illustrating examples of screen displays according to the second embodiment;
FIG. 17 is a diagram illustrating a modification example of a screen display according to the second embodiment;
FIG. 18 is a diagram illustrating an overview of processing in an information processing system according to a third embodiment;
FIG. 19 is a timing chart illustrating processing of the devices included in the information processing system according to the third embodiment; and
FIGs. 20A to 20C are diagrams illustrating examples of screen displays according to the third embodiment.

### DESCRIPTION OF EMBODIMENTS

### <<First Embodiment>>

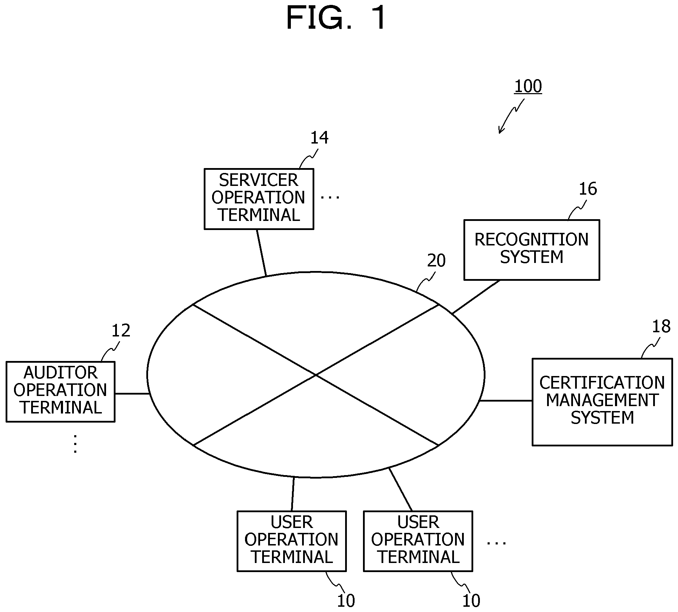

A first embodiment of an information processing system will be described in detail below with reference to FIGs. 1 to 9.

FIG. 1 schematically illustrates a configuration of an information processing system 100 according to the first embodiment. The information processing system 100 includes user operation terminals 10 as user terminals, an auditor operation terminal 12 as an auditor terminal (first terminal), a servicer operation terminal 14 as a servicer terminal (second terminal), a recognition system 16, and a certification management system 18. Devices included in the information processing system 100 are coupled to a network 20 such as the Internet.

The user operation terminals 10 are terminals used by employees of a company. By using the user operation terminals 10, employees may mutually transmit recognition data (including award, authorization, expression of gratitude, and recognition) with each other. For example, the user operation terminals 10 receive the recognition data from other user operation terminals 10.

For example, the auditor operation terminal 12 is a terminal used by a manager or the like (referred to as an auditor) in the company. When there is a request for an audit of the recognition data from an other employee (person who receives the recognition data), for example, the auditor performs, for example, an interview with the employee to check whether the recognition data has been appropriately exchanged. In a case where the auditor determines that the recognition data has been appropriately exchanged, the auditor operates the auditor operation terminal 12 to issue an audit certificate to a user operation terminal 10 of the employee who has requested the audit.

The servicer operation terminal 14 is a terminal used by the employees of a personnel department, contact personnel for a welfare service, or the like (referred to as servicers). Upon reception of the audit certificate from the user operation terminal 10, the servicer operation terminal 14 verifies whether the audit certificate is, for example, not tampered. In a case where there is no tampering or the like, the servicer operation terminal 14 executes a process in which a point or the like accompanying the recognition data associated with the audit certificate is converted into a consideration (a tangible object such as money or an item or a service such as welfare or personnel evaluation) and the consideration is returned to the employee.

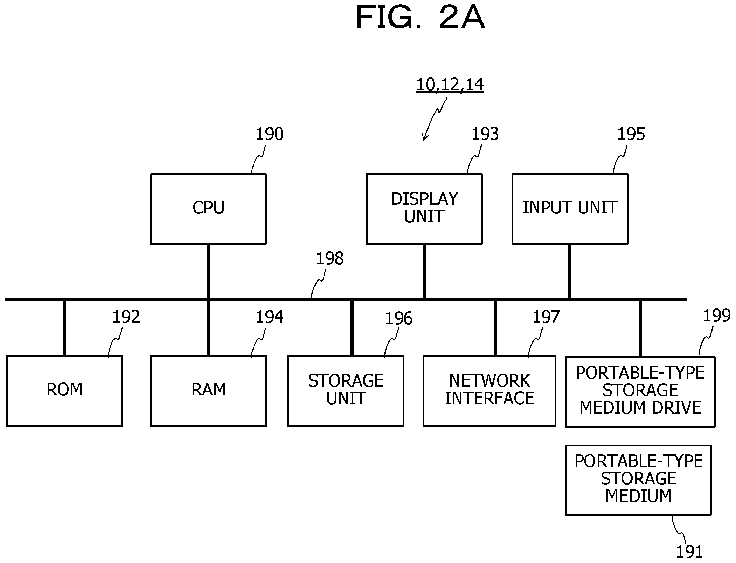

FIG. 2A illustrates a hardware configuration of the user operation terminal 10, the auditor operation terminal 12, and the servicer operation terminal 14. As illustrated in FIG. 2A, each of the terminals 10, 12, and 14 includes, for example, a central processing unit (CPU) 190, a read-only memory (ROM) 192, a random-access memory (RAM) 194, a storage unit (solid-state drive (SSD) herein) 196, a network interface 197, a display unit 193, an input unit 195, and a portable-type storage medium drive 199. Each of these components is coupled to a bus 198. The display unit 193 includes a liquid crystal display or the like, and the input unit 195 includes a keyboard, a mouse, a touch panel, and the like. The portable-type storage medium drive 199 is a device that reads information from and writes information to a portable-type storage medium 191.

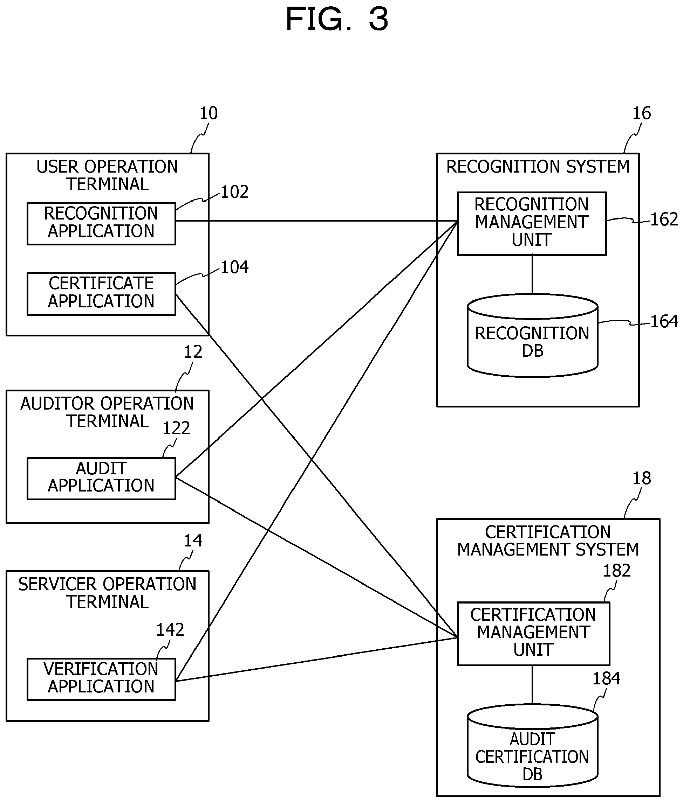

The user operation terminals 10 execute a recognition application 102 and a certificate application 104 illustrated in FIG. 3.

The recognition application 102 is an application for exchanging the recognition data between the employees (between the user operation terminals 10). The recognition application 102 has a function of transmitting the audit request to audit the obtained recognition data to the auditor operation terminal 12.

The certificate application 104 is an application for obtaining the audit certificate issued in the auditor operation terminal 12 and presenting the obtained audit certificate to the servicer operation terminal 14.

The auditor operation terminal 12 executes an audit application 122. The audit application 122 accepts the audit request to audit the recognition data obtained by the employee. Also, when the audit result is input by the auditor, the audit application 122 issues the audit certificate based on the input and transmits the audit certificate to the user operation terminal 10.

The servicer operation terminal 14 executes a verification application 142. The verification application 142 cooperates with the certification management system 18 to execute verification of whether the audit certificate is correct (for example, not tampered). Also, in a case where it is determined that the audit certificate is correct as a result of the verification, the verification application 142 executes a process in which the recognition data corresponding to the audit certificate is obtained, the obtained recognition data is converted into the consideration (a tangible object such as money or a service), and the consideration is returned to the employee.

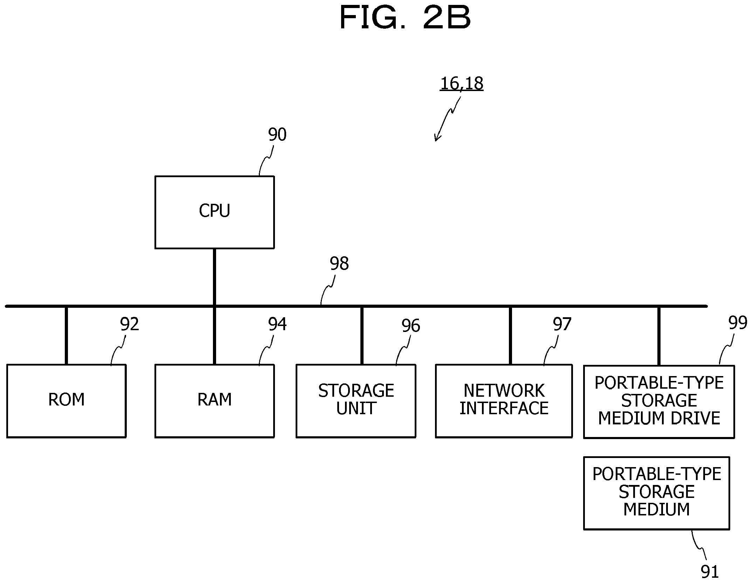

FIG. 2B illustrates an example of a hardware configuration of the recognition system 16 and the certification management system 18. Each of the systems 16 and 18 includes, for example, a CPU 90, a ROM 92, a RAM 94, a storage unit (for example, SSD) 96, a network interface 97, a portable-type storage medium drive 99, and the like. Each of these components is coupled to a bus 98. In each of the systems 16 and 18, functions of a recognition management unit 162 and a certification management unit 182 illustrated in FIG. 3 are realized when the CPU 90 executes a program stored in the ROM 92 or the storage unit 96 or a program read by the portable-type storage medium drive 99 from the portable-type storage medium 91. The functions of the recognition management unit 162 and the certification management unit 182 may be realized by an integrated circuit such as, for example, an application-specific integrated circuit (ASIC) or a field-programmable gate array (FPGA).

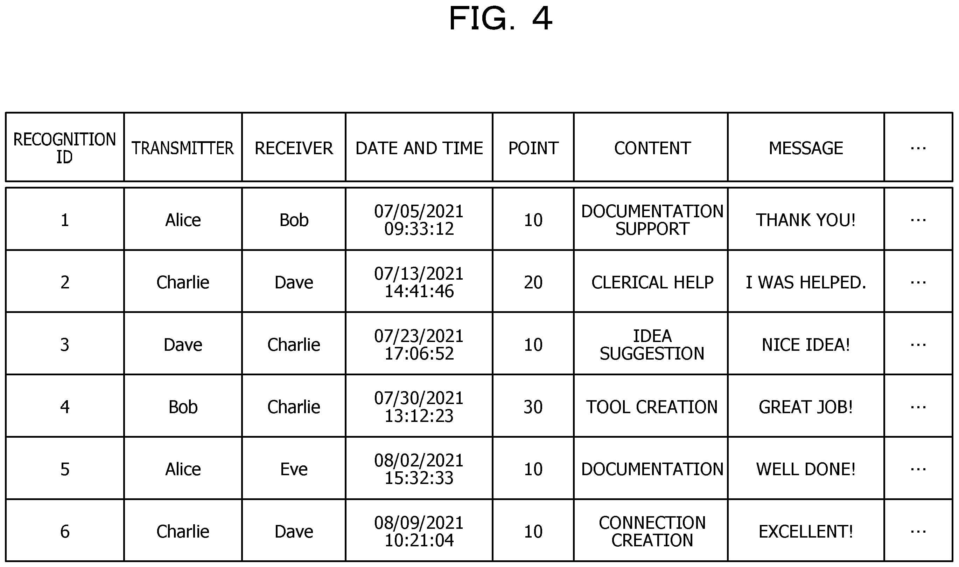

The recognition management unit 162 manages, in a recognition database (DB) 164, the recognition data exchanged between the employees. In the recognition DB 164, data as illustrated in FIG. 4 is managed. For example, in the recognition DB 164, information including "RECOGNITION ID", "TRANSMITTER", "RECEIVER", "DATE AND TIME", "POINT", "CONTENT", "MESSAGE", and so forth is stored for each piece of the recognition data. The recognition ID is identification information assigned to each piece of the recognition data. The transmitter and receiver are names or the like of the employees who have exchanged the recognition data. The date and time include a year, month, date, and time at which the recognition data is exchanged. The point is a point accompanying the recognition data. The content and the message are content and a message of the recognition input or selected by the transmitter when transmitting the recognition data. The content and the message are not necessarily managed in the recognition DB 164.

According to the present embodiment, it is assumed that the point of the recognition data may be freely set by the transmitter. However, in order to maintain fairness among the employees, an upper limit of the number of points transmittable from each employee within a predetermined period may be determined. Regarding the point, the same value may be given in advance to each piece of the recognition data. For example, 1 point may be given to each piece of the recognition data independently of the recognition content. For example, the point corresponding to the recognition content may be given such that 10 points are given in a case where the recognition content is "CLERICAL HELP" and 20 points are given in a case where the recognition content is "DOCUMENTATION".

Referring back to FIG. 3, the certification management unit 182 manages, in an audit certification DB 184, information for verifying the audit certificate issued by the auditor operation terminal 12. A public key of the audit certificate, information on an expiration state, and the like to be used for verifying the audit certificate are managed in the audit certification DB 184. The verification application 142 of the servicer operation terminal 14 cooperates with the certification management unit 182 and uses the public key or the like managed in the audit certification DB 184, so that the verification application 142 may verify whether the audit certificate presented by the certificate application 104 is a correct audit certificate without, for example, being tampered. The audit certification DB 184 may be a distributed ledger that manages information to be used for verifying the audit certificate.

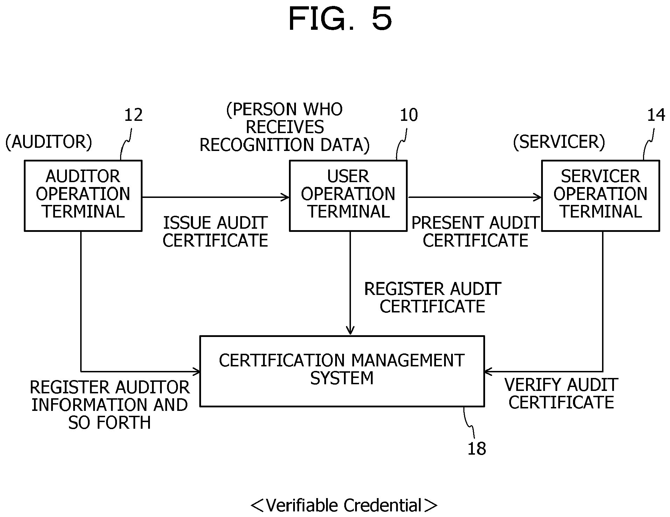

In the information processing system 100 according to the present embodiment, a verifiable credential base is built. For example, according to the present embodiment, a mechanism of a distributed file sharing system as illustrated in FIG. 5 is built among the auditor (auditor operation terminal 12), the person who receives the recognition data (user operation terminal 10), the servicer (the servicer operation terminal 14), and the certification management system 18. When the auditor operation terminal 12 issues the audit certificate to the user operation terminal 10, the auditor operation terminal 12 registers, in the certification management system 18, information on the auditor, for example, the public key of the auditor for verifying a digital signature given to the audit certificate by the auditor, and the like. When the user operation terminal 10 obtains the audit certificate, the user operation terminal 10 registers the audit certificate in the certification management system 18, stores the audit certificate, and presents the audit certificate to the servicer operation terminal 14. When the certification management system 18 accepts the registration of the audit certificate from the user operation terminal 10, the certification management system 18 manages the public key, the information on the expiration state, and the like to be used for verifying the audit certificate. The servicer operation terminal 14 to which the audit certificate has been presented from the user operation terminal 10 cooperates with the certification management system 18 and verifies the audit certificate by using, for example, the public key of the auditor to check whether the audit certificate has not been tampered. With such a mechanism, the servicer to whom the audit certificate is presented may verify that, for example, the audit certificate has not been tampered.

### (About Processing)

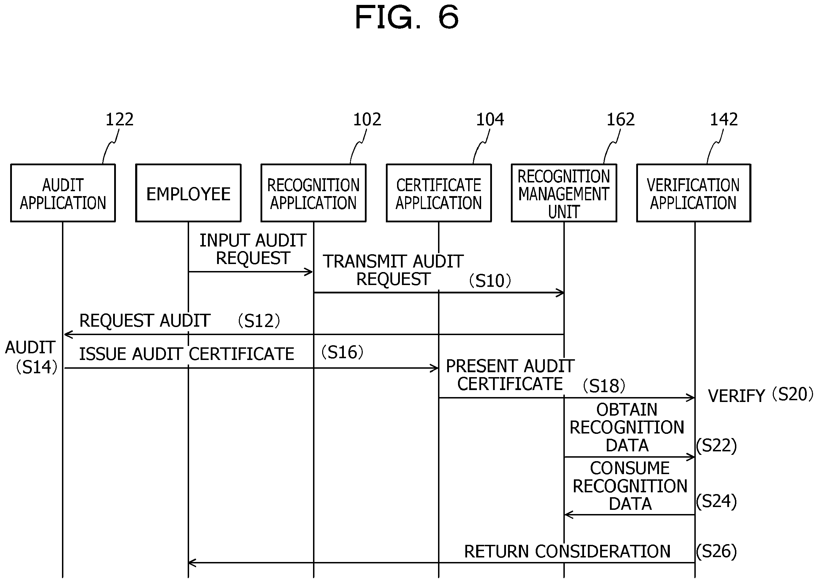

Next, processing executed in the information processing system 100 is described in detail based on a timing chart illustrated in FIG. 6 and with reference to other drawings as appropriate.

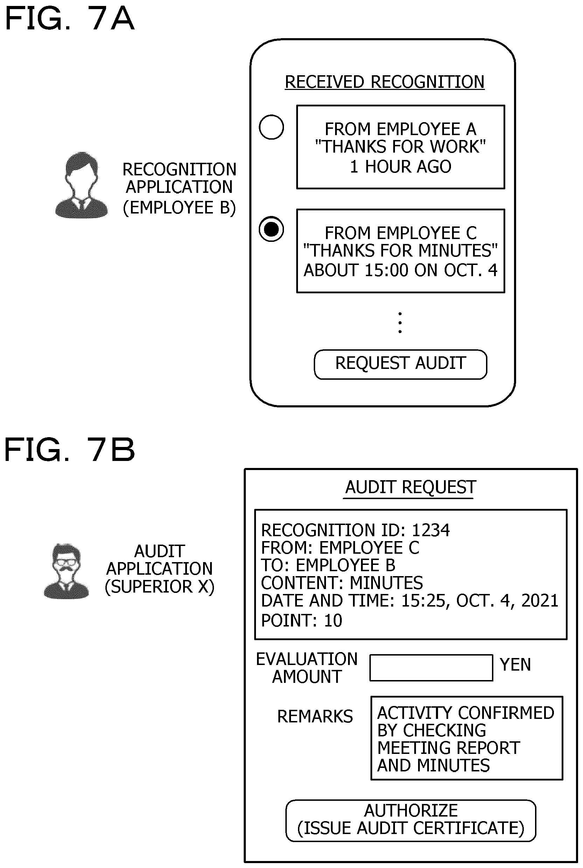

As a premise of the processing in FIG. 6, it is assumed that the recognition data is mutually transmitted between the employees (between the user operation terminals 10), and the recognition management unit 162 manages, in the recognition DB 164, the information on the recognition data mutually transmitted between the employees. It is also assumed that the recognition application 102 is started up in the user operation terminal 10 of the employee B, and a screen as illustrated in FIG. 7A, for example, a screen in which the content of the recognition data transmitted to the employee B may be checked is displayed.

In the screen illustrated in FIG. 7A, the employee B selects one piece of the recognition data desired to be audited by the auditor (assumed to be a superior X) and presses a "REQUEST AUDIT" button. When the employee B presses the "REQUEST AUDIT" button, the recognition application 102 transmits an audit request to audit the selected piece of the recognition data to the recognition management unit 162 (step S10 in FIG. 6).

The recognition management unit 162 having accepted a demand for the audit request requests the audit application 122 of the auditor operation terminal 12 to audit (step S12). At this time, the audit application 122 obtains information on the recognition data from the recognition DB 164 (information included in FIG. 7B) and transmits the information to the audit application 122. The audit application 122 displays a screen as illustrated in FIG. 7B in the display unit 193 of the auditor operation terminal 12. Fields of "EVALUATION AMOUNT" and "REMARKS" are provided in the screen illustrated in FIG. 7B. However, these fields are to be filled in by the auditor, and it is assumed that nothing is input at this stage.

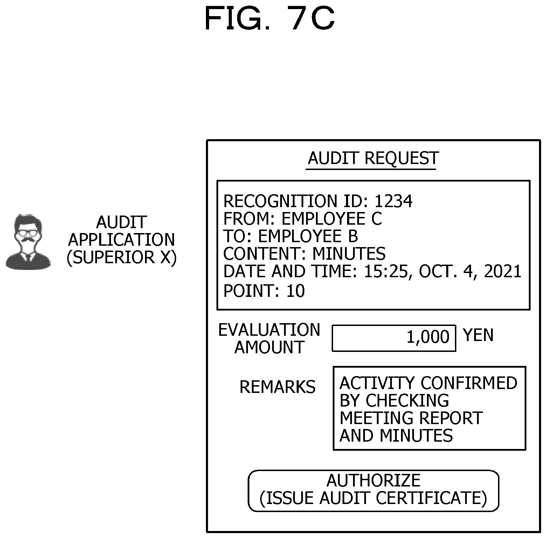

In the audit application 122, the auditor (superior X) executes the audit (step S14). The auditor (superior X) performs, for example, an interview with the employee B and a check of a result and to check whether there is not an unauthorized activity or the like in the background or the process of giving the recognition data. As a result, when there is no problem, as illustrated in FIG. 7C, the auditor (superior X) inputs information to the fields of the evaluation amount and the remarks in the screen and presses an "AUTHORIZE (ISSUE AUDIT CERTIFICATE)" button.

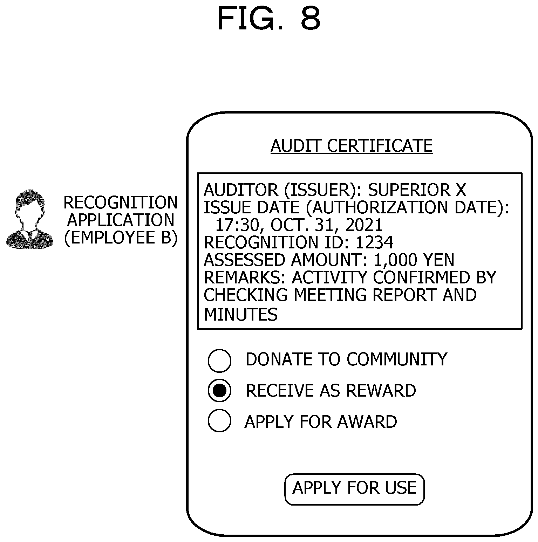

When the "AUTHORIZE (ISSUE AUDIT CERTIFICATE)" button is pressed in the screen illustrated in FIG. 7C, the audit application 122 issues the audit certificate to the certificate application 104 of the user operation terminal 10 (step S16). FIG. 8 illustrates an example of a screen to be displayed when the certificate application 104 receives the audit certificate. As illustrated in FIG. 8, the audit certificate includes the recognition ID and is in a condition in which the audit certificate is associated with the audited recognition data. The certificate application 104 transmits information on the obtained audit certificate to the certification management unit 182 of the certification management system 18. The certification management unit 182 manages, in the audit certification DB 184, information such as the public key and the expiration state of the audit certificate.

In the screen of the certificate application 104 illustrated in FIG. 8, the employee B may select a method of using the recognition data associated with the audit certificate. Examples of the method of using include, for example, "DONATE TO COMMUNITY", "RECEIVE AS REWARD", "APPLY FOR AWARD", and so forth. The employee B selects the method of using in the screen illustrated in FIG. 8 and presses an "APPLY FOR USE" button.

When the employee B presses the "APPLY FOR USE" button, the certificate application 104 transmits the audit certificate to the verification application 142 of the servicer operation terminal 14 and presents the audit certificate (step S18).

The verification application 142 cooperates with the certification management unit 182 to verify the correctness of the audit certificate (whether the audit certificate is not tampered) (step S20). Thus, in a case where it is determined that the audit certificate is correct, the verification application 142 obtains the recognition data associated with the audit certificate from the recognition management unit 162 (step S22) and notifies the recognition management unit 162 that the recognition data is consumed (step S24). The recognition management unit 162 having received the notification deletes the information on the consumed recognition data from the recognition DB 164.

Also, the verification application 142 executes a process of converting the recognition data into the tangible object or service (consideration) based on the method of using selected in the screen illustrated in FIG. 8 (step S26). For example, in a case where "RECEIVE AS REWARD" is selected as the method of using, the verification application 142 processes such that the reward of the amount of money set in the recognition data is transferred to a bank account of the employee B together with the payroll. For example, in a case where "APPLY FOR AWARD" is selected as the method of using, the verification application 142 executes a process of applying for an intra-company award. For the intra-company award, the point and the amount of money accompanying the recognition data are considered. For example, in a case where "DONATE TO COMMUNITY" is selected as the method of using, the verification application 142 executes a process of donating the amount of money set in the recognition data to the community. Even in a case where a consideration corresponding to the recognition data is donated, since the employee B contributes as desired, it may be said that the consideration is a consideration for the employee. The recognition data may be converted into a tangible object or a service other than those described above. For example, a discount ticket that discounts a charge for using a welfare facility may be issued in accordance with the point or the amount of money accompanying the recognition data or the point may be accumulated and considered in personnel evaluation.

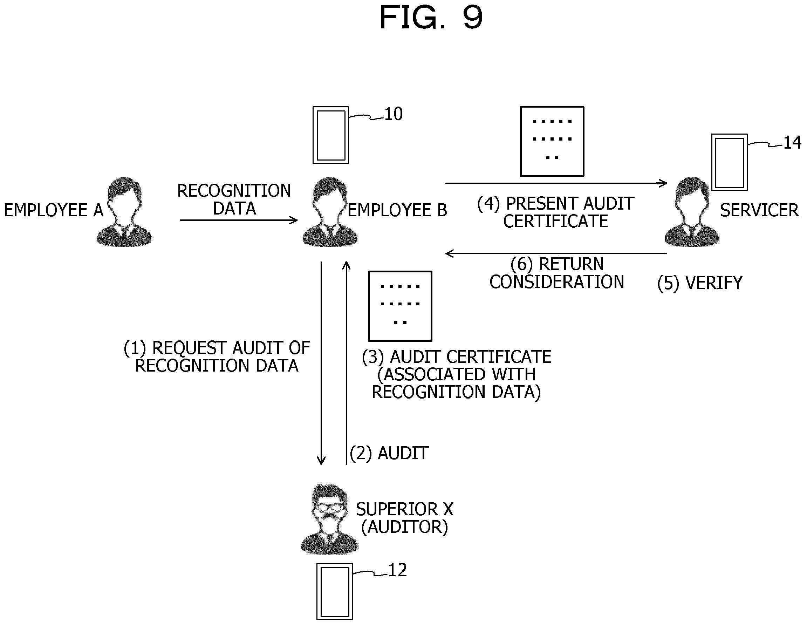

FIG. 9 illustrates an overview of the processing according to this first embodiment. According to this first embodiment, upon accepting an audit demand, from the employee B, for the audit of the recognition data, the user operation terminal 10 transmits the audit request to the auditor operation terminal 12 ((1) in FIG. 9) and obtains the audit certificate issued from the auditor operation terminal 12 ((2) and (3) in FIG. 9). The user operation terminal 10 transmits and presents the audit certificate to the servicer operation terminal 14 that may verify the correctness of the audit certificate and that converts the recognition data into the consideration, and the user operation terminal 10 demand the conversion of the recognition data associated with the presented audit information into the consideration ((4) in FIG. 9). The servicer operation terminal 14 verifies the audit certificate ((5) in FIG. 9). When there is no tampering or the like, the servicer operation terminal 14 returns the consideration corresponding to the recognition data to the employee B (provides the tangible object or service) ((6) in FIG. 9). Thus, according to this first embodiment, in a case where the audit certificate is issued and the audit certificate is not, for example, tampered, the consideration corresponding to the recognition data associated with the audit certificate may be returned to the employee B. Accordingly, even when a system in which the consideration corresponding to the recognition data is returned to the employee (a system with which a quantitative advantage of the recognition data may be realized) is adopted in the company, it is difficult for the employees to collude with each other to mutually transmit the recognition data in an unauthorized manner. Thus, an appropriate system operation may be performed. The recognition data associated with the audit certificate is converted into the consideration and returned to the employee only in a case where the audit certificate has not been tampered. This may suppress the occurrence of such a situation in which the employee obtains a profit in an unauthorized manner by tampering with the audit certificate.

According to this first embodiment, the user operation terminal 10, the auditor operation terminal 12, and the servicer operation terminal 14 are, together with the certification management system 18, included in the distributed file sharing system (verifiable credential) in which the information on the audit certificate is shared. Thus, the presence/absence of tampering with the audit certificate may be appropriately verified.

A system other than the distributed file sharing system (verifiable credential) may be adopted as long as the system is able to verify the correctness of the audit certificate.

### <<Second Embodiment>>

A second embodiment will be described below.

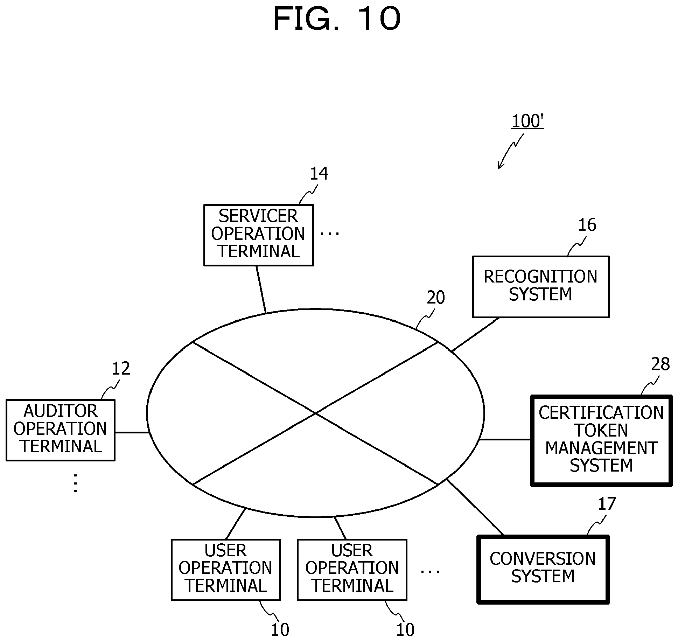

FIG. 10 illustrates a system configuration of an information processing system 100' according to this second embodiment. The information processing system 100' according to this second embodiment includes a certification token management system 28 instead of the certification management system 18 included in the information processing system 100 according to the first embodiment. Also, the information processing system 100' includes a conversion system 17 as a generation device that generates a recognition token from one or a plurality of pieces of the recognition data.

In a case where the recognition data is highly frequently exchanged between the employees (for example, once a day, ten times a day, or the like), it takes time to request the audit for each piece of the recognition data. Thus, according to this second embodiment, a mechanism is provided in which, for example, the employee may collectively convert one or a plurality of pieces of the recognition data with a medium frequency (for example, every several days or every several weeks) into a recognition token (an electronic certificate in which the recognition data is summarized and a signature is given). According to this second embodiment, the mechanism is provided such that the employee may request the audit on a recognition-token-by-recognition-token basis and may receive the return of the consideration on a recognition-token-by-recognition-token basis.

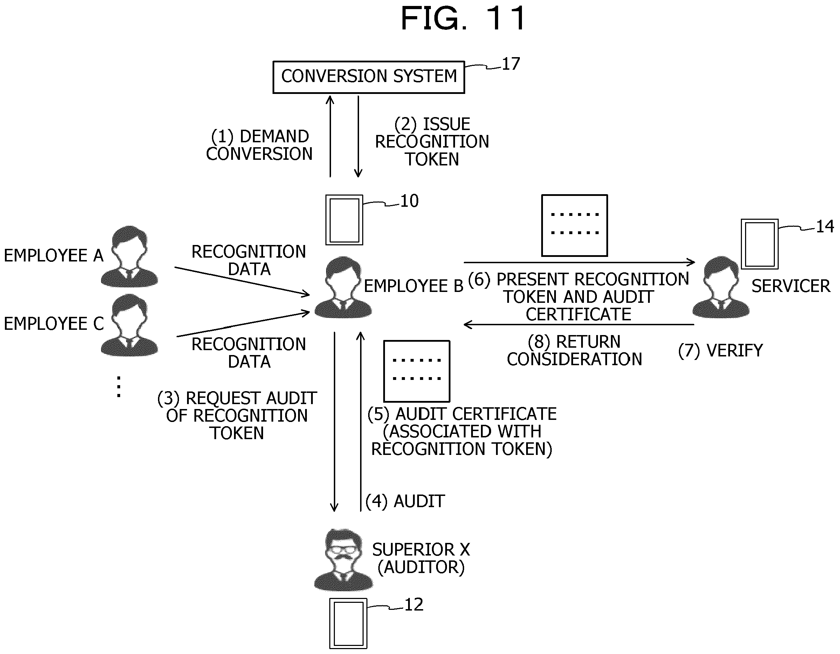

FIG. 11 illustrates an overview of processing according to this second embodiment. As illustrated in FIG. 11, according to this second embodiment, the employee B demands that the conversion system 17 convert one or a plurality of pieces of the recognition data ((1) in FIG. 11). The conversion system 17 issues a recognition token corresponding to the recognition data and transmits the recognition token to the user operation terminal 10 ((2) in FIG. 11). The employee B requests the auditor operation terminal 12 used by the auditor (superior X) from the user operation terminal 10 to audit the recognition token ((3) in FIG. 11). The auditor who receives the request performs the audit by performing, for example, an interview with the employee B ((4) in FIG. 11). When it is determined that the exchange of the recognition is not performed in an unauthorized manner, the auditor operates the auditor operation terminal 12 to issue the audit certificate to the user operation terminal 10 ((5) in FIG. 11). The employee B manages the recognition token and the audit certificate in the user operation terminal 10. The employee B presents the recognition token and the audit certificate to the servicer operation terminal 14 as desired and demands the return of the consideration corresponding to the recognition token ((6) in FIG. 11). The servicer operation terminal 14 cooperates with the certification token management system 28 to verify the recognition token and the audit certificate ((7) in FIG. 11). When there is no problem with the verification, the servicer operation terminal 14 returns the consideration corresponding to the recognition token to the employee B ((8) in FIG. 11).

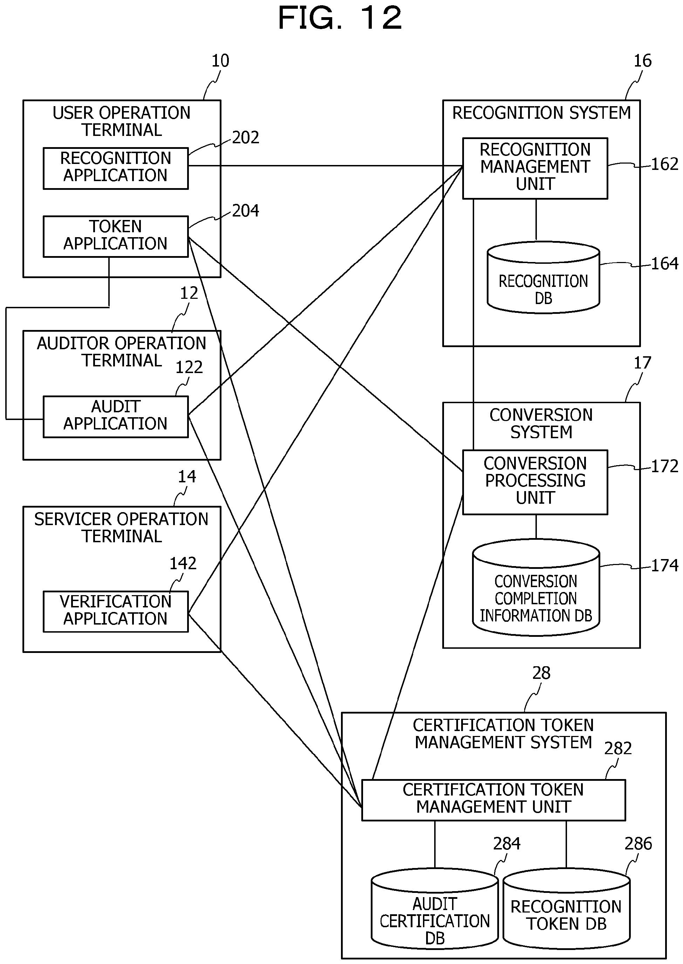

FIG. 12 illustrates a functional block diagram of the information processing system 100'. Hereinafter, description is made by focusing on the differences from the first embodiment (FIG. 3).

### (User Operation Terminal 10)

A recognition application 202 and a token application 204 are executed in the user operation terminal 10.

The recognition application 202 transmits the demand for the conversion of one or a plurality of pieces of the recognition data into the recognition token (conversion request) to a conversion processing unit 172 of the conversion system 17 via the recognition management unit 162 of the recognition system 16.

The token application 204 obtains the recognition token transmitted from the conversion processing unit 172. The token application 204 transmits the audit request to audit the recognition token to the audit application 122 and obtains the audit certificate transmitted from the audit application 122. The token application 204 executes a process of presenting the obtained audit certificate and the recognition token corresponding to the audit certificate to the servicer operation terminal 14.

### (Conversion System 17)

The conversion system 17 includes the conversion processing unit 172. Upon obtaining the conversion request to convert the recognition data from the recognition application 102 via the recognition management unit 162, the conversion processing unit 172 generates the recognition token from one or a plurality of the recognition data (converts one or a plurality of the recognition data into the recognition token) and transmits the recognition token to the token application 204. The conversion processing unit 172 records, in a conversion completion information DB 174, information on the recognition data (recognition ID) having been converted, so that the conversion processing unit 172 does not perform the conversion when the conversion request to convert the converted recognition data arrives.

### (Certification Token Management System 28)

The certification token management system 28 includes a certification token management unit 282. The certification token management unit 282 manages, in an audit certification DB 284, the information to be used to verify the audit certificate (public key and the like) as in the first embodiment. The certification token management unit 282 also manages, in a recognition token DB 286, information to be used to verify the recognition token (such as a signature) generated in the conversion processing unit 172. The audit certification DB 284 and the recognition token DB 286 may be a distributed ledger.

### (About Processing)

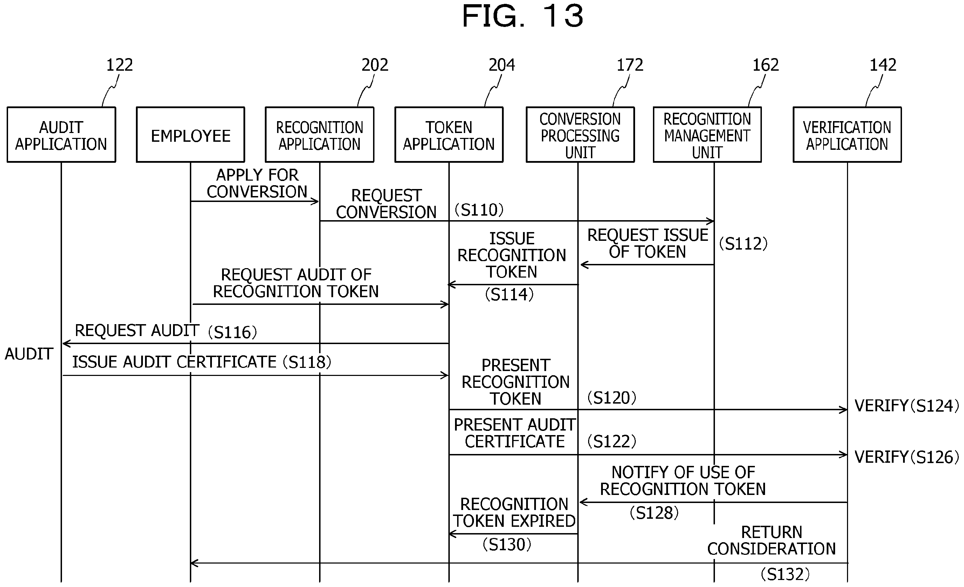

Next, processing executed in the information processing system 100' according to the second embodiment is described in detail based on a timing chart illustrated in FIG. 13 and with reference to other drawings as appropriate.

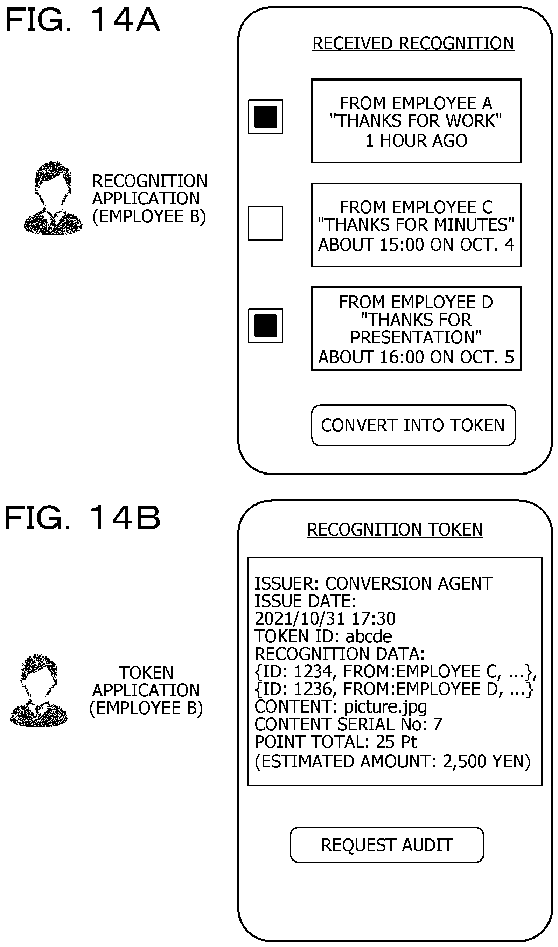

As a premise of the processing in FIG. 13, it is assumed that the recognition data is mutually transmitted between the employees (between the user operation terminals 10), and the recognition management unit 162 manages, in the recognition DB 164, the information on the recognition data mutually transmitted between the employees. It is also assumed that the recognition application 202 is started up in the user operation terminal 10 of the employee B, and a screen in which the content of the recognition data transmitted to the employee B may be checked such as a screen illustrated in FIG. 14A is displayed.

When the employee B selects one or a plurality of pieces of the recognition data that the employee B desires to convert into the recognition token and presses the "CONVERT INTO TOKEN" button in the screen illustrated in FIG. 14A, the employee B may apply for the conversion. When the employee B presses the "CONVERT INTO TOKEN" button, the recognition application 202 makes a request for conversion of the selected recognition data to the recognition management unit 162 (step S110 in FIG. 13).

The recognition management unit 162 having accepted the conversion request notifies the conversion processing unit 172 of the conversion system 17 of a token issue request (conversion request) (step S112). In response to this notification, the conversion processing unit 172 issues the recognition token of the selected recognition data and transmits the recognition token to the token application 204 (step S114).

At the stage where the token application 204 receives the recognition token, a screen as illustrated in FIG. 14B is displayed in the display unit 193 in the user operation terminal 10. In addition to the information included in the recognition data, the recognition token also includes a token ID and information on an illustration that defines a display form when the recognition token is displayed (content and a content serial number). The screen illustrated in FIG. 14B also includes a "REQUEST AUDIT" button. When the employee B presses this "REQUEST AUDIT" button, the employee B may make the audit request to audit the recognition token.

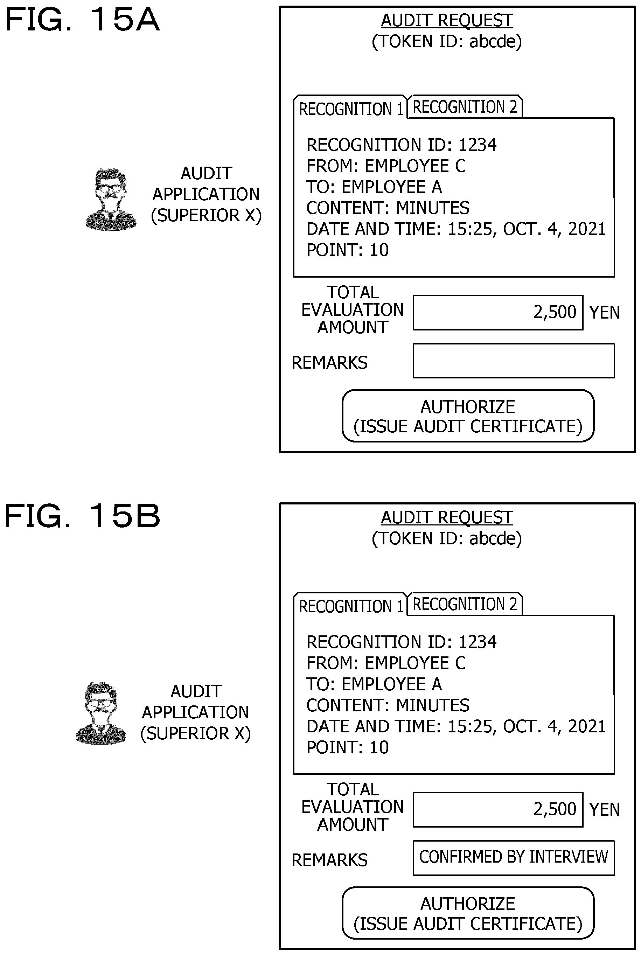

When there is the audit request from the employee B, the token application 204 transmits the audit request to the audit application 122 (step S116). At this time, the audit application 122 displays a screen as illustrated in FIG. 15A in the display unit 193 of the auditor operation terminal 12 based on the information included in the recognition token. A field of "REMARKS" is provided in the screen illustrated in FIG. 15A. However, this field is to be filled in by the auditor, and it is assumed that nothing is input at this stage.

In the audit application 122, the auditor (superior X) executes the audit. The auditor (superior X) performs, for example, an interview with the employee B to check whether there is not an unauthorized activity or the like in giving the recognition data. As a result, when there is no problem, as illustrated in FIG. 15B, the auditor (superior X) inputs information to the field of the remarks in the screen and presses an "AUTHORIZE (ISSUE AUDIT CERTIFICATE)" button.

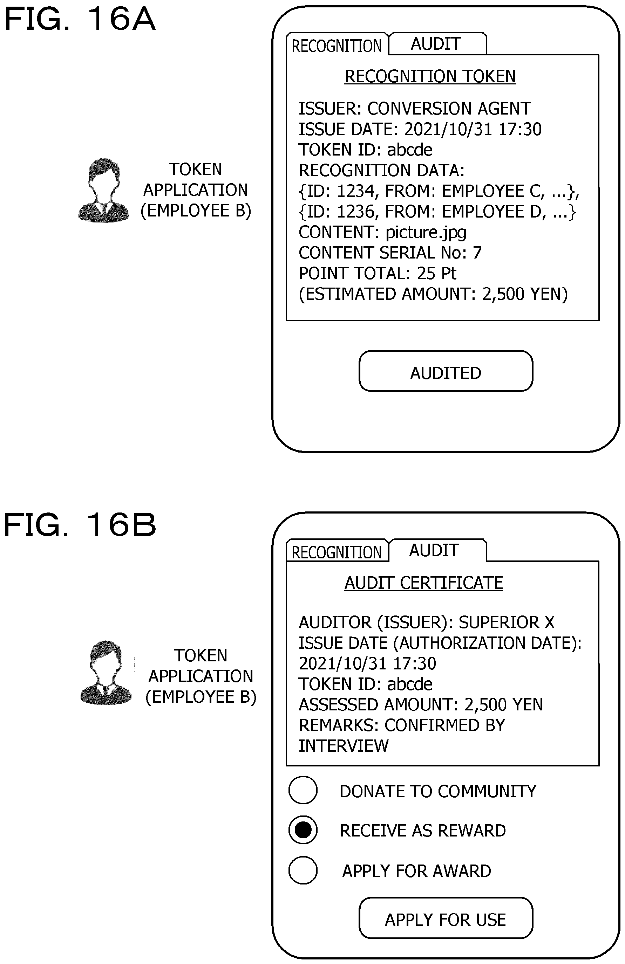

When the "AUTHORIZE (ISSUE AUDIT CERTIFICATE)" is pressed in the screen illustrated in FIG. 15B, the audit application 122 issues the audit certificate to the token application 204 of the user operation terminal 10 (step S118). FIG. 16A illustrates an example of a screen to be displayed when the token application 204 receives the audit certificate. The screen illustrated in FIG. 16A is provided with "RECOGNITION" and "AUDIT" tabs, and in a state in which the "RECOGNITION" tab is selected, the "AUDITED" is displayed for the recognition token. Meanwhile, when the "AUDIT" tab is selected, the information on the audit certificate is displayed, and the method of using may be selected as illustrated in FIG. 16B. When the token application 204 receives the audit certificate, the information on the audit certificate is transmitted from the token application 204 to the certification token management unit 282 of the certification token management system 28. The certification token management unit 282 stores in the audit certification DB 284 the information to be used to verify the audit certificate (public key, expiration state, and the like).

The employee B may select the method of using the recognition token in the screen illustrated in FIG. 16B. The employee B selects the method of using and presses an "APPLY FOR USE" button in the screen illustrated in FIG. 16B.

When the employee B presses the "APPLY FOR USE" button, the token application 204 transmits and presents the recognition token and the audit certificate to the verification application 142 of the servicer operation terminal 14 (steps S120 and S122).

The verification application 142 cooperates with the certification token management unit 282 to verify the correctness of the recognition token and the audit certificate (whether the recognition token or the audit certificate is not tampered) (steps S124 and S126). Thus, in a case where it is determined that the recognition token and the audit certificate are correct, the verification application 142 notifies the conversion processing unit 172 of the use of the recognition token (notification of the use) (step S128). The conversion processing unit 172 notifies the token application 204 that the recognition token has expired (step S130). As a result, use of the used recognition token may be suppressed in the token application 204. The verification application 142 executes a process of returning the consideration corresponding to the recognition token to the employee B based on the method of using selected in the screen illustrated in FIG. 16B (step S132).

As described above, according to this second embodiment, the user operation terminal 10 obtains the electronic certificate (recognition token) generated from the recognition data in the conversion system 17 ((1) and (2) in FIG. 11). Upon accepting the audit demand, from the employee B, for the audit of the recognition token, the user operation terminal 10 transmits the recognition token to the auditor operation terminal 12 to make the audit request ((3) in FIG. 11). The user operation terminal 10 transmits and presents the recognition token and the audit certificate to the servicer operation terminal 14 ((6) in FIG. 11). The servicer operation terminal 14 verifies the recognition token and the audit certificate ((7) in FIG. 11). When there is no tampering or the like, the servicer operation terminal 14 returns the consideration corresponding to the recognition token to the employee B ((8) in FIG. 11). Thus, according to this second embodiment, in the case where the recognition token or the audit certificate of the recognition token is not, for example, tampered, the consideration corresponding to the recognition token may be returned to the employee. Accordingly, even when a system in which the consideration corresponding to the recognition token is returned to the employee (a system with which a quantitative advantage of the recognition data may be realized) is adopted in the company, it is difficult for the employees to collude with each other to exchange the recognition data in an unauthorized manner. Thus, an appropriate system operation may be performed. The consideration corresponding to the recognition token is returned to the employee in the case where the recognition token or the audit certificate has not been tampered. This may suppress the occurrence of such a situation in which the employee obtains a profit in an unauthorized manner by tampering with the recognition token or the audit certificate. The recognition data is converted into the recognition token and the employee may hold the recognition token. Thus, each employee may control distribution of the recognition data.

According to this second embodiment, the conversion system 17 generates the recognition token from one or a plurality of selected pieces of the recognition data (the conversion system 17 converts one or a plurality of selected pieces of the recognition data into the recognition token). Thus, as desired, a plurality of pieces of the recognition data may be handled by integrating the plurality of pieces of the recognition data into a single item. In this case, by bundling up the pieces of the recognition data and handling the bundled pieces of the recognition data, work of the auditor and the servicer may be reduced, and efficiency may be improved.

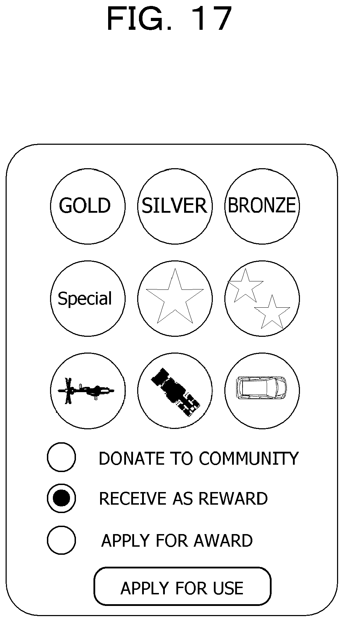

According to the second embodiment described above, when the audited recognition token is displayed, the display as illustrated in FIG. 16A is performed. Meanwhile, since illustration data, message data, and the like may be included in the recognition token as the information of the content, illustrations or messages may be displayed when the recognition token is displayed. For example, when the recognition token is displayed with illustrations such as coins as illustrated in FIG. 17, it is thought that the enjoyment of collecting the coins becomes a motivation for work (gamification) and a culture of mutually transmitting the recognition data is created. The employee does not necessarily request the audit immediately after converting the recognition data into the recognition token. In this case, in the display illustrated in FIG. 17, it is sufficient that the recognition token that has been audited and the recognition token that has not been audited be displayed so as to be able to be distinguished from each other.

### <<Third Embodiment>>

A third embodiment will be described below.

A system configuration of the information processing system 100' according to this third embodiment is similar to the system configuration of the second embodiment (FIG. 10). A functional block diagram of the devices included in the information processing system 100' is also similar to that of the second embodiment (FIG. 12). However, it is assumed that the audit certification DB 284 illustrated in FIG. 12 is omitted.

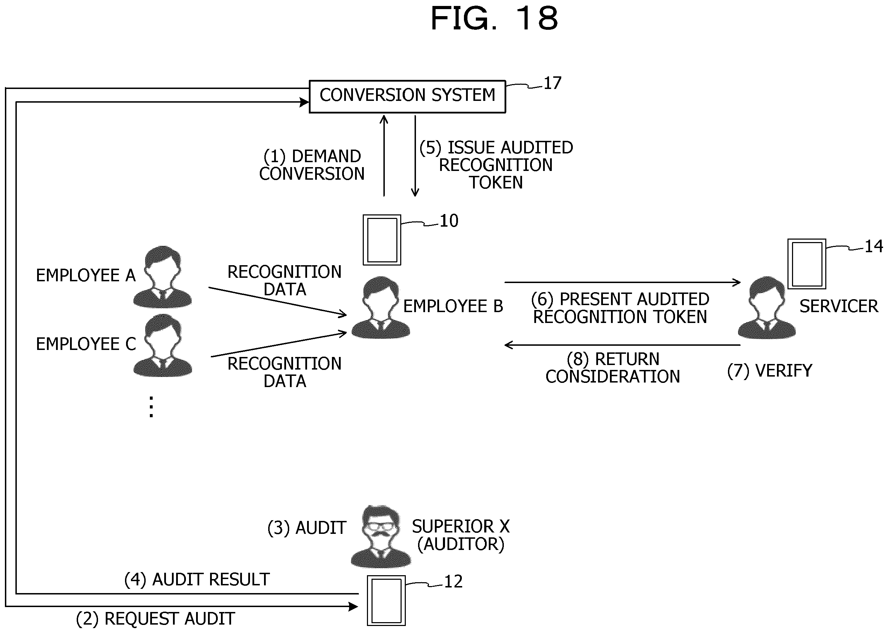

FIG. 18 illustrates an overview of processing according to this third embodiment. As illustrated in FIG. 18, according to the present embodiment, the employee B demands that the conversion system 17 convert one or a plurality of pieces of the recognition data ((1) in FIG. 18). The conversion system 17 issues the recognition token corresponding to the recognition data, transmits the recognition token to the auditor operation terminal 12 used by the auditor (superior X), and requests the audit of the recognition token ((2) in FIG. 18). The auditor who receives the audit request performs the audit by performing, for example, an interview with the employee B ((3) in FIG. 18). When it is determined that the exchange of the recognition is not performed in an unauthorized manner, the auditor operation terminal 12 notifies the conversion system 17 of an audit result (authorization) ((4) in FIG. 18). The conversion system 17 having received this notification issues the audited recognition token and transmits the audited recognition token to the user operation terminal 10 ((5) in FIG. 18). The employee B manages the audited recognition token in the user operation terminal 10. The employee B presents the audited recognition token to the servicer operation terminal 14 as desired and demands the consideration corresponding to the recognition token ((6) in FIG. 18). The servicer operation terminal 14 cooperates with the certification token management system 28 to verify the audited recognition token ((7) in FIG. 18). When there is no problem with the verification, the servicer operation terminal 14 returns the consideration corresponding to the recognition token to the employee B ((8) in FIG. 18).

### (About Processing)

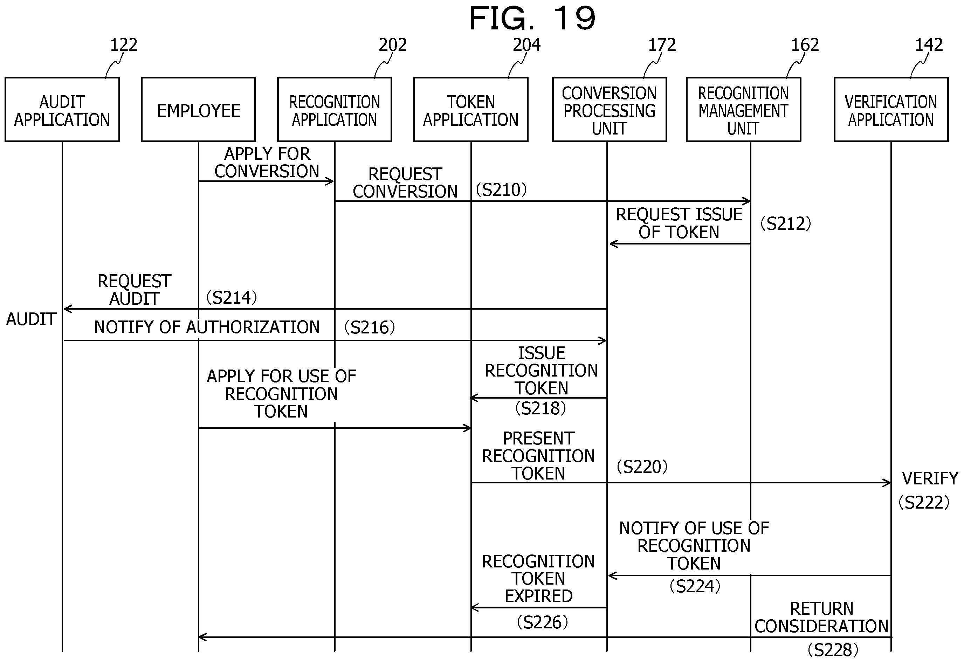

Next, the processing executed in the information processing system 100' according to the third embodiment is described in detail based on a timing chart illustrated in FIG. 19 and with reference to other drawings as appropriate.

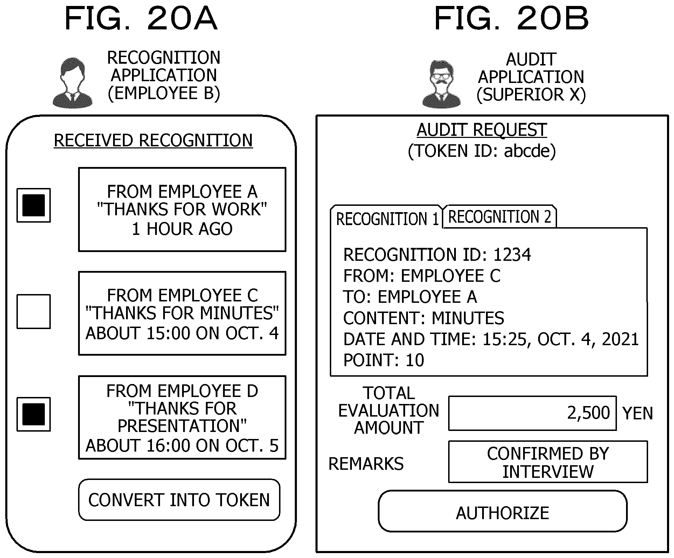

As a premise of the processing in FIG. 19, it is assumed that the recognition data is mutually transmitted between the employees (between the user operation terminals 10), and the recognition management unit 162 manages, in the recognition DB 164, the information on the mutually transmitted recognition data. It is also assumed that the recognition application 202 is started up in the user operation terminal 10 of the employee B, and a screen in which the content of the recognition data transmitted to the employee B may be checked such as a screen illustrated in FIG. 20A is displayed.

When the employee B selects one or a plurality of pieces of the recognition data that the employee B desires to convert into the recognition token and presses the "CONVERT INTO TOKEN" button in the screen illustrated in FIG. 20A, the employee B applies for the conversion. When the employee B presses the "CONVERT INTO TOKEN" button, the recognition application 202 demands that the recognition management unit 162 convert the selected recognition data (conversion request, step S210 in FIG. 19).

The recognition management unit 162 having accepted the conversion request notifies the conversion processing unit 172 of the conversion system 17 of the token issue request (conversion request) (step S212). In response to this notification, the conversion processing unit 172 issues the recognition token of the selected piece or pieces of the recognition data, transmits the recognition token to the audit application 122, and transmits the audit request to audit the recognition token (step S214).

The audit application 122 displays a screen as illustrated in FIG. 20B in the display unit 193 of the auditor operation terminal 12 based on the information included in the recognition token.

In the audit application 122, the auditor (superior X) executes the audit. The auditor (superior X) performs, for example, an interview with the employee B to check whether there is not an unauthorized activity or the like in giving the recognition data. As a result, when there is no problem, the auditor (superior X) describes desired items and then presses the "AUTHORIZE" button in the screen in FIG. 20B.

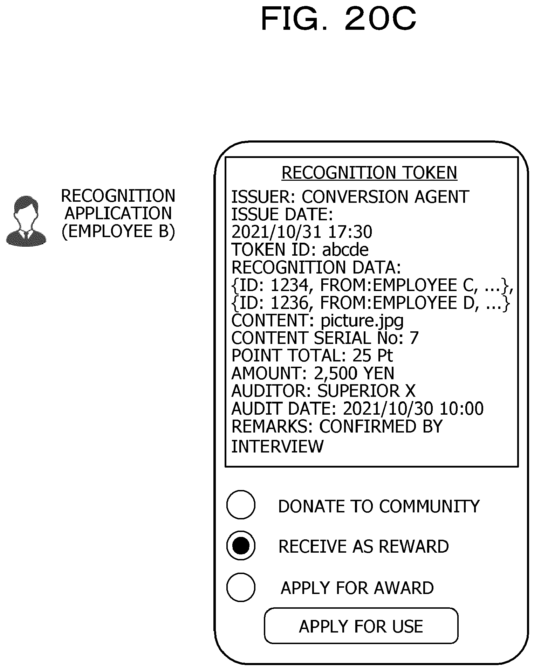

When the "AUTHORIZE" button is pressed in the screen illustrated in FIG. 20B, the audit application 122 notifies the conversion processing unit 172 of the authorization (S216). Based on the notification, the conversion processing unit 172 issues the audited recognition token and transmits the audited recognition token to the token application 204 of the user operation terminal 10 (step S218). FIG. 20C illustrates an example of a screen to be displayed when the token application 204 receives the audited recognition token. In the screen illustrated in FIG. 20C, the information on the audited recognition token is displayed, and the method of using may be selected. The audited recognition token includes information on the name of the auditor and the audit date in addition to the token ID, the information on the selected recognition data, information on the content indicating the display form, the total of the point, and the amount of money. When the token application 204 receives the audited recognition token, the signature information of the audited recognition token is transmitted to the certification token management unit 282 of the certification token management system 28. The certification token management unit 282 manages the received signature information in the recognition token DB 286.

The employee B selects the method of using the audited recognition token and presses the "APPLY FOR USE" button in the screen illustrated in FIG. 20C.

When the employee B presses the "APPLY FOR USE" button, the token application 204 transmits and presents the audited recognition token to the verification application 142 of the servicer operation terminal 14 (step S220).

The verification application 142 cooperates with the certification token management unit 282 to verify the correctness of the audited recognition token (whether the audited recognition token is not tampered) (step S222). Thus, in a case where it is determined that the audited recognition token is correct, the verification application 142 notifies the conversion processing unit 172 of the use of the audited recognition token (step S224). The conversion processing unit 172 notifies the token application 204 that the audited recognition token has expired (step S226). The verification application 142 executes a process of returning the consideration corresponding to the audited recognition token to the employee based on the method of using selected in the screen illustrated in FIG. 20C (step S228).

As described above, according to this third embodiment, the user operation terminal 10 requests the auditor operation terminal 12 to audit via the conversion system 17 that generates the electronic certificate (recognition token) from the recognition data ((1) and (2) in FIG. 18). When authorized by the auditor operation terminal 12, the user operation terminal 10 obtains the audited recognition token issued by the conversion system 17 ((4) and (5) in FIG. 18). The user operation terminal 10 presents the audited recognition token to the servicer operation terminal 14 ((6) in FIG. 18). The servicer operation terminal 14 verifies the audited recognition token ((7) in FIG. 18). When there is no tampering or the like, the servicer operation terminal 14 returns the consideration corresponding to the audited recognition token to the employee ((8) in FIG. 18). Thus, according to this third embodiment, in the case where the audited recognition token is not, for example, tampered, the consideration corresponding to the audited recognition token may be returned to the employee. Accordingly, even when a system in which the consideration corresponding to the audited recognition token is returned to the employee (a system with which a quantitative advantage of the recognition data may be realized) is adopted in the company, it is difficult for the employees to collude with each other to exchange the recognition data in an unauthorized manner. Thus, an appropriate system operation may be performed. The consideration corresponding to the audited recognition token is returned to the employee in the case where the audited recognition token has not been tampered. This may suppress the occurrence of such a situation in which the employee obtains a profit in an unauthorized manner by tampering with the audited recognition token.

According to this third embodiment, the conversion system 17 generates the recognition token from one or a plurality of selected pieces of the recognition data (the conversion system 17 converts one or a plurality of selected pieces of the recognition data into the recognition token). Thus, as desired, a plurality of pieces of the recognition data may be handled by integrating the plurality of pieces of the recognition data into a single item. In this case, by bundling up the pieces of the recognition data and handling the bundled pieces of the recognition data, work of the auditor and the servicer may be reduced, and efficiency may be improved.

Also according to the third embodiment described above, similarly to the second embodiment, the audited recognition token may be displayed with illustrations such as coins as illustrated in FIG. 17. Thus, it is thought that the enjoyment of collecting the coins becomes a motivation for work (gamification) and a culture of mutually transmitting the recognition data is created.

Although the case where the information processing system is used for exchanging the recognition data between the employees has been described in the first to third embodiments described above, it is not limiting. The information processing system may be used in an organization such as a school.

The above-described processing functions may be realized by a computer. In this case, there is provided a program that describes processing content of the functions to be included in a processing apparatus. When the computer executes the program, the above-described processing functions are realized in the computer. The program that describes the processing content may be recorded in a computer-readable storage medium (except for a carrier wave).

To distribute the program, for example, a form of a portable-type storage medium such as a Digital Versatile Disc (DVD), a compact disc read-only memory (CD-ROM), or the like in which the program is recorded is sold. The program may be stored in a storage device of a server computer and transferred from the server computer to an other computer via a network.

The computer executing the program stores the program recorded in the portable-type storage medium or transferred from the server computer in, for example, the storage device thereof. The computer reads the program from the storage device thereof and executes processes in accordance with the program. The computer may read the program directly from the portable-type storage medium and execute the processes in accordance with the program. Every time the program is transferred from the server computer, the computer may sequentially execute the processes in accordance with the received program.

The above-described embodiments are examples of a preferred embodiment of the present disclosure. However, the embodiments are not limited thereto, and various modifications may be made without departing from the gist of the present disclosure.

The following appendices are further disclosed in relation to the description of the first to third embodiments.

## Claims

1. A recognition-related data processing program comprising instructions which, when executed by a computer of a user terminal to be used by a user, cause the computer to execute processing comprising:
accepting an audit demand for an audit of at least one piece of recognition-related data received from an other user terminal;
transmitting, in response to the audit demand, an audit request to a first terminal that is different from the user terminal, and obtaining audit information on the at least one piece of recognition-related data transmitted from the first terminal; and
transmitting at least the audit information to a second terminal that is able to verify correctness of the audit information and that executes a return, to the user, a consideration which corresponds to the at least one piece of recognition-related data, and demanding that the second terminal return, to the user, the consideration which corresponds to the at least one piece of recognition-related data associated with the transmitted audit information.

2. The recognition-related data processing program according to claim 1, wherein
the user terminal is included, together with the first terminal and the second terminal, in a distributed file sharing system in which information on verification of the audit information is shared.

3. The recognition-related data processing program according to claim 1 or 2, the processing further including
obtaining an electronic certificate generated from the at least one piece of recognition-related data, wherein,
in the accepting, the audit demand for the audit of the electronic certificate is accepted, wherein,
in the obtaining the audit information, the audit request, together with the electronic certificate, is transmitted to the first terminal, and audit information on the electronic certificate received from the first terminal is obtained, and wherein,
in the demanding, the electronic certificate and the audit information on the electronic certificate are transmitted to the second terminal, and the second terminal is demanded that the second terminal return, to the user, the consideration which corresponds to the transmitted electronic certificate.

4. The recognition-related data processing program according to claim 3, wherein,
the at least one piece of recognition-related data include a plurality of pieces of the recognition-related data, and wherein,
in the obtaining the electronic certificate, the electronic certificate generated from one or the plurality of pieces of recognition-related data that have been selected is obtained.

5. The recognition-related data processing program according to claim 1 or 2, wherein,
in the obtaining the audit information, an audit request to audit an electronic certificate is transmitted to the first terminal via a generation device that generates the electronic certificate from the at least one piece of recognition-related data, and an audited electronic certificate generated in the generation device based on the audit information transmitted from the first terminal to the generation device is obtained, and wherein,
in the demanding, the audited electronic certificate is transmitted to the second terminal, and the second terminal is demanded that the second terminal return, to the user, the consideration which corresponds to the audited electronic certificate that has been transmitted.

6. The recognition-related data processing program according to any one of claims 3 to 5, wherein
the electronic certificate includes information that defines a display form.

7. A recognition-related data processing method implemented by a computer of a user terminal to be used by a user, the method comprising:
accepting an audit demand for an audit of at least one piece of recognition-related data received from an other user terminal;
transmitting, in response to the audit demand, an audit request to a first terminal that is different from the user terminal, and obtaining audit information on the at least one piece of recognition-related data transmitted from the first terminal; and
transmitting at least the audit information to a second terminal that is able to verify correctness of the audit information and that executes a return, to the user, a consideration which corresponds to the at least one piece of recognition-related data, and demanding that the second terminal return, to the user, the consideration which corresponds to the at least one piece of recognition-related data associated with the transmitted audit information.

8. An information processing system comprising:
a user operation terminal used by a user, the user operation terminal being configured to receive at least one piece of recognition-related data from a terminal;
an auditor operation terminal configured to accept, in response to receiving from the user operation terminal an audit request for an audit of the at least one piece of recognition-related data, an inputting of audit information on the at least one piece of recognition-related data, to transmit the accepted audit information to the user operation terminal; and
a servicer operation terminal configured to
in response to receiving the audit information from the user operation terminal, verify correctness of the audit information, and
in a case where a result of the verifying indicates that the audit information is correct, pay to the user of the user operation terminal a consideration corresponding to the at least one piece of recognition-related data associated with the audit information.
